# FASCICULE DE BREVET EUROPEEN

(11) **EP 2 692 006 B1**
(45) Date de publication et mention de la délivrance du brevet: **16.08.2017**
(21) Numéro de dépôt: 12717416.7
(22) Date de dépôt: 29.03.2012
(51) Int. Cl.: H01M 8/04029, H01M 8/0267, B60L 11/18, B60L 1/02, H01M 8/0258, B60L 3/00

(54) **PILE À COMBUSTIBLE COMPORTANT UN EMPILEMENT DE CELLULES ET DE PLAQUES CONDUCTRICES BIPOLAIRES**
BRENNSTOFFZELLENSTAPEL MIT EINEM STAPEL VON ZELLEN UND BIPOLAREN LEITERPLATTEN
FUEL-CELL STACK COMPRISING A STACK OF CELLS AND BIPOLAR CONDUCTIVE PLATES

(30) Priorité: 30.03.2011 FR 1152643
(43) Date de publication de la demande: 05.02.2014
(73) Titulaire: Commissariat à l'Énergie Atomique et aux Énergies Alternatives, 75015 Paris (FR)
(72) Inventeur: GLIPA, Xavier, 78480 Verneuil Sur Seine (FR); RANJARD, Jean-François, 78280 Guyancourt (FR); PINTON, Eric, 38130 Echirolles (FR); POIROT CROUVEZIER, Jean-Philippe, 38450 Saint Georges De Commiers (FR); BEGOT, Sylvie, 90330 Chaux (FR); HAREL, Fabien, 90200 Giromagny (FR); LE CANUT, Jean-Marc, 90000 Belfort (FR)
(74) Mandataire: Thinat, Michel
(86) Numéro de dépôt international: PCT/FR2012/050671
(87) Numéro de publication internationale: WO 2012/131267

(56) Documents cités:
- WO-A1-2004/025763
- DE-A1- 10 323 647
- JP-A- 63 016 562
- JP-A- 2005 302 658
- JP-A- 2005 327 672
- US-A1- 2003 180 590

## Description

La présente invention concerne une pile à combustible comprenant un système de refroidissement par fluide caloporteur, elle concerne aussi un groupe électrogène et un véhicule automobile équipés de ce type de pile à combustible.

Les piles à combustible sont développées aujourd'hui en particulier pour équiper des véhicules en remplacement des moteurs thermiques, afin d'améliorer le rendement énergétique et de réduire les émissions de gaz polluants.

Les piles à combustible comportent généralement un empilement de cellules élémentaires comprenant deux électrodes séparées par un électrolyte, reliées entre elles par des plaques conductrices bipolaires comportant des conduits internes pour apporter à ces électrodes les produits nécessaires à la réaction, et des canaux de circulation d'un fluide caloporteur.

Les réactions électrochimiques qui se réalisent au contact des électrodes, génèrent un courant électrique et produisent de l'eau, tout en dégageant une énergie calorifique qui échauffe les différents composants.

Pour fonctionner correctement, les piles à combustible doivent se trouver à une certaine température comprise suivant le type entre 60 et 800°C. La chaleur dégagée par le démarrage des réactions quand la pile est froide, sert d'abord à échauffer les cellules pour les amener à la température de fonctionnement souhaitée.

Pour réguler la température des cellules, le fluide caloporteur mis en circulation par une pompe, vient au contact de ces cellules prélever des calories en se réchauffant, ces calories étant ensuite délivrées à un échangeur thermique pour refroidir le fluide, notamment par échange avec l'air ambiant.

Un problème qui se pose dans le cas d'un démarrage de la pile à combustible se trouvant à une température basse inférieure à 0°C, est que l'eau produite par la réaction électrochimique risque de geler tant que cette température se trouve en dessous de ce seuil de 0°C. La pile à combustible ne peut alors plus fonctionner correctement, et risque d'être détruite.

Pour remédier à ce problème, un système de refroidissement connu, présenté notamment par le document EP-A1-0074701, comporte un circuit de refroidissement comprenant une première boucle de circulation disposant d'un échangeur thermique et d'une pompe débitant dans une direction, et une deuxième boucle de circulation qui traverse les cellules. Les deux boucles de circulation se recoupent en un point unique, au niveau d'une vanne à quatre voies comprenant deux positions, permettant en échangeant ces positions d'alterner le sens de circulation du fluide dans la pile à combustible.

On réalise ainsi à froid par des alternances rapprochées du sens de circulation du fluide dans la pile à combustible, une limitation du même volume de fluide traversant les plaques bipolaires dans un sens et dans l'autre, pour obtenir une homogénéisation de la température des cellules, ainsi qu'une concentration de la chaleur qui reste dans les cellules pour les échauffer plus rapidement. On peut réaliser un démarrage et une montée en température plus rapide de la pile à combustible, notamment pour atteindre rapidement la température de 0°C.

Toutefois la masse thermique globale à échauffer, comprenant notamment l'ensemble des cellules, des plaques bipolaires et du fluide contenu dans ces plaques, reste importante, et le temps de montée en température peut être trop long. Le volume de fluide en circulation dans la pile à combustible peut être aussi trop important.

Le document WO 2004/025763 divulgue une pile à combustible comportant les caractéristiques techniques telles que définies dans le préambule de la revendication 1.

Cependant, cette pile à combustible connue a pour inconvénient, outre son instabilité de fonctionnement, d'un unique pilotage temporaire par la température du moyen de fermeture temporaire constitué par un bilame qui, en cas de point chaud, conduirait à l'ouverture du bilame même si non souhaitée. En outre, la conception de la pile à combustible à plaques bipolaires dont les canaux internes de circulation du fluide caloporteur sont obturés de manière temporaire, n'assure pas un bon compromis entre le gain pour accélérer la montée en température lors de la phase de demande à froid et la conservation de l'efficacité du refroidissement à chaud.

La présente invention a notamment pour but d'éviter ces inconvénients de la technique antérieure, en proposant une pile à combustible qui peut monter en température plus rapidement.

Elle propose à cet effet une pile à combustible conforme à la partie caractérisante de la revendication 1.

Avantageusement, les plaques bipolaires comprenant des canaux qui sont obturés, sont réalisées à partir des autres plaques bipolaires.

De préférence le volume interne des canaux est mis sous vide, ou rempli par un gaz ou par un matériau comportant une faible capacité thermique.

En variante, les plaques bipolaires comprenant des canaux qui sont obturés, comportent un moyen d'obturation temporaire disposant d'un moyen de fonctionnement automatique en fonction de la température de cette plaque.

Ces plaques bipolaires peuvent aussi comporter un moyen d'obturation temporaire qui est piloté, comme un micro-actionneur.

Avantageusement, la pile à combustible comporte dans ses zones d'extrémité, une plus grande densité de plaques bipolaires comprenant des canaux internes de circulation qui ne sont pas en service, ou une absence de canaux internes.

Certaines des plaques bipolaires ont par rapport aux autres plaques, une absence de canaux internes et alors une masse thermique réduite par rapport aux autres plaques comportant des canaux.

Un avantage de la pile à combustible selon l'invention, est que l'on peut en particulier dans les zones de cette pile s'échauffant moins et nécessitant un refroidissement plus faible, limiter la masse thermique de ces zones avec une absence de canaux, ou limiter le flux de fluide avec des canaux qui ne sont pas en service.

L'invention a aussi pour objet un groupe électrogène disposant d'une pile à combustible, qui comporte l'une quelconque des caractéristiques précédentes.

L'invention a de plus pour objet un véhicule électrique disposant d'une pile à combustible délivrant un courant électrique utilisé pour la traction, cette pile à combustible comportant l'une quelconque des caractéristiques précédentes.

L'invention a de plus pour objet un véhicule électrique disposant d'une pile à combustible délivrant un courant électrique utilisé pour la traction, comprenant la caractéristique précédente.

L'invention sera mieux comprise et d'autres caractéristiques et avantages apparaîtront plus clairement à la lecture de la description ci-après donnée à titre d'exemple, en référence aux dessins annexés dans desquels :
- la figure 1 présente différentes zones de température d'une pile à combustible selon l'art antérieur, qui est en cours de fonctionnement ;
- la figure 2 présente une plaque bipolaire pour une pile à combustible selon l'invention ;
- la figure 3 présente un détail de cette plaque bipolaire ;
- la figure 4 présente un détail d'une plaque bipolaire selon l'invention, réalisée suivant une variante ;
- la figure 5 est un graphique présentant en fonction du temps, l'évolution des tensions et des puissances des différentes cellules d'une pile à combustible selon l'invention ; et
- la figure 6 est un graphique présentant l'évolution des tensions et des puissances des différentes cellules d'une pile à combustible selon l'art antérieur.

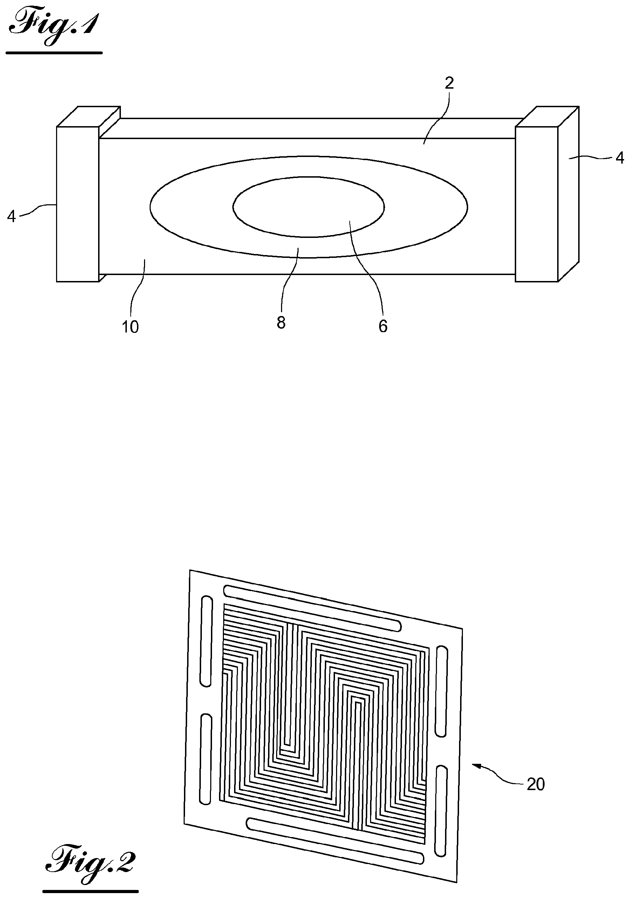

La figure 1 présente une pile à combustible 1 comprenant une série de cellules 2 empilées avec des plaques bipolaires intercalées entre ces cellules, les plaque bipolaires étant traversées chacune par un fluide caloporteur d'un système de refroidissement qui est géré par le calculateur de gestion de la pile à combustible. Les plaques bipolaires sont identiques et sont alimentées de manière égale par le fluide caloporteur.

La pile à combustible 1 comporte à chaque extrémité une plaque d'extrémité 4, qui transmet le courant à des connecteurs externes.

La pile à combustible 1 comporte de plus un circuit extérieur non représenté de circulation du fluide caloporteur, comprenant une pompe de circulation et un échangeur fluide-air, pour dissiper dans l'air ambiant les calories prélevées dans les cellules 2.

On constate pendant le démarrage de la pile à combustible 1 que l'on obtient des zones de températures différentes, dues notamment aux plaques d'extrémités 4 qui constituent des masses thermiques plus lentes à réchauffer, et aux échanges thermiques des cellules avec l'air ambiant, plus élevés aussi aux extrémités.

Une zone centrale 6 des cellules 2 éloignée des plaques d'extrémités 4, comporte une température plus élevée, une zone intermédiaire 8 entourant cette zone centrale comporte une température moyenne, et une zone extérieure 10 mieux refroidie par l'air ambiant et proche des plaques d'extrémités froides, comporte une température plus basse.

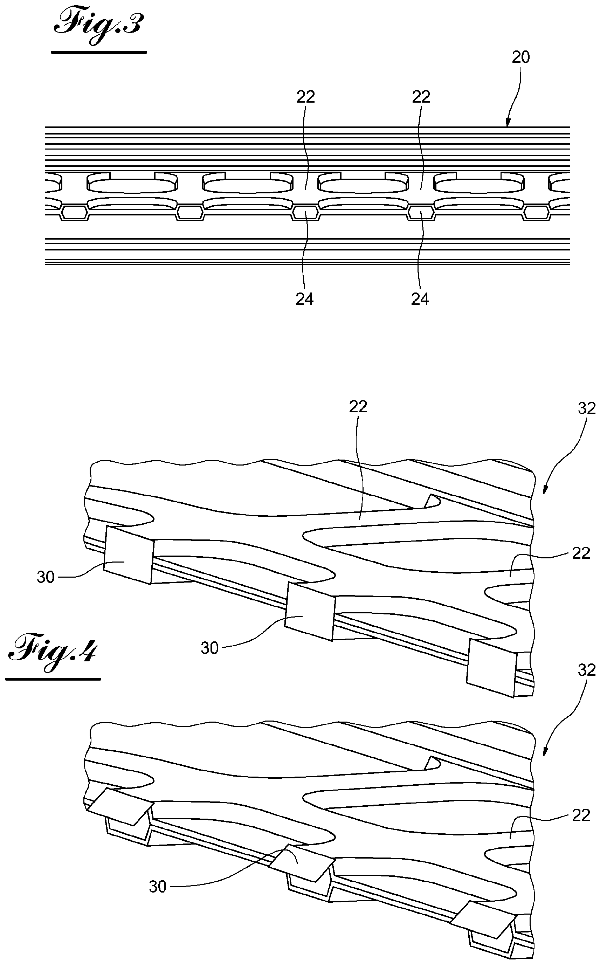

Les figures 2 et 3 présentent une plaque bipolaire 20 en contact avec la surface frontale de chaque cellule qui lui est accolée, pour transmettre le courant entre ces deux cellules en formant un pôle électrique d'une des cellules, et le pôle opposé de l'autre cellule.

La plaque bipolaire 20 apporte aux cellules accolées par une série de canaux et de perçages répartis sur les faces en contact, les réactifs nécessaires aux réactions électrochimiques.

La plaque bipolaire 20 comporte de plus des canaux internes 22 réalisés dans l'épaisseur de cette plaque, et destinés à recevoir le fluide caloporteur qui circule dans ces plaques, ces canaux étant prévus sur toutes les plaques de la pile à combustible 1.

Pour certaines des plaques bipolaires 20, les entrées de tous les canaux internes 22 sont fermées de manière définitive par un moyen d'obturation 24, comportant par exemple un pincement du métal formant l'entrée de ces canaux, un point de colle ou une soudure, de manière à fermer de manière étanche le volume interne formé par l'ensemble des canaux. On peut en particulier utiliser un joint silicone pour réaliser la fermeture des canaux 22. De façon alternative, seulement certains des tunnels de circulation du fluide sont obturés. Idéalement, il est préférable de choisir un matériau d'obturation similaire à celui utilisé pour effectuer l'étanchéité du coeur de pile. L'obturation peut se faire aussi par pincement de l'extrémité des tunnels.

On obtient ainsi un volume des canaux 22 qui peut être mis sous vide avant fermeture, laissé plein d'air, ou rempli préalablement par un autre gaz ou par un matériau comportant une très faible capacité thermique, de manière à obtenir une plaque bipolaire 20 comportant globalement une capacité thermique réduite par rapport à la même plaque comprenant ses canaux internes remplis du fluide caloporteur.

Un avantage des plaques bipolaires 20 comprenant un moyen d'obturation définitif 24, est qu'elles peuvent être facilement produites à partir de plaques standards comprenant des canaux 22 ouverts, en y ajoutant à la fin une opération d'obturation simple et économique.

En variante, on peut utiliser des plaques bipolaires ne comportant pas de canaux, qui sont conçues de manière spécifique pour cet usage. On peut dans ce cas réaliser des plaques bipolaires moins épaisses, qui comprennent une masse métallique plus faible et donc une masse thermique réduite.

Les plaques bipolaires 20 comprenant des canaux fermés 22 ou une absence de canaux, sont disposées dans les zones les plus froides de la pile à combustible 1, par exemple en alternant un nombre de plus en plus grand de ce type de plaque quand la zone est plus froide, de manière à réduire la masse thermique et le débit de fluide caloporteur dans ces zones pour obtenir une température plus élevée, et procurer une meilleure répartition de cette température sur l'ensemble de la pile.

La figure 4 présente en variante un autre moyen d'obturation des canaux internes 22, qui est temporaire, et comprenant pour chaque canal une micro-vanne 30 qui peut automatiquement ou de manière contrôlée se fermer comme présenté dans la partie supérieure de la figure, ou s'ouvrir comme présenté dans la partie inférieure, en fonction de la température de la plaque bipolaire 32 et du fluide contenu dans ses canaux.

Les micro-vannes 30 peuvent être réalisées de différentes manières, par exemple elles peuvent comporter un système bilame qui se déplace par dilation de lames, les matériaux des deux lames et/ou l'assemblage des deux lames et/ou leurs formes étant choisis pour provoquer l'ouverture du canal interne lorsque le fluide atteint la température d'autorisation du passage du fluide, un micro-calorstat qui se déplace par la dilation d'une capsule de gaz à l'encontre de la force de rappel d'un ressort, assurant ainsi une ouverture progressive du canal depuis une position de fermeture, ou un micro-actionneur, qui peut utiliser notamment une technologie piézo-électrique.

Les plaques bipolaires 32 comprenant des moyens d'obturation temporaires 30 des canaux 22, peuvent lors du démarrage de la pile à combustible 1 par temps froid, avantageusement aider à la régulation de la température dans les zones les plus froides de la pile à combustible 1 se trouvant à proximité des plaques d'extrémité 4, en limitant le débit du fluide caloporteur dans ces zones pour permettre une montée en température plus rapide.

Avantageusement, l'ouverture des micro-vannes 30 se fait au dessus de 10°C, et au plus tard à une température un peu inférieure à la température nominale de fonctionnement de la pile à combustible, telle qu'une température 20°C en-dessous de la température nominale de la pile par exemple à une température de 60°C quand la pile doit fonctionner normalement à une température de 80°C.

La fermeture doit se faire à une température inférieure à celle de l'ouverture, pour obtenir une hystérésis qui évite une instabilité de fonctionnement.

La micro-vanne 30 est disposée à l'extérieur du canal 24 au niveau de l'entrée de ce canal et montée par l'un de ses bords libres solidarisé le long d'un bord correspondant du canal délimitant l'entrée de celui-ci par exemple par soudage ou sertie en force.

Dans sa position de fermeture, elle s'oppose à la circulation à l'intérieur du canal de la plaque du fluide entrainé par la pompe externe. Lorsque cette micro-vanne 30 est du type bilame, on choisit les matériaux constitutifs de ses deux lames de sorte que, jusqu'à une température d'autorisation du passage du fluide (par exemple 10°C-30°C), le bilame soit plan et recouvre entièrement l'entrée du canal en s'appliquant sur les tranches des bords libres du canal définissant l'entrée (voir figure 4, partie supérieure) et qu'une fois que le fluide a atteint cette température, le bilame se déforme, par exemple en se courbant et ouvre l'entrée 24 du canal 22 (figure 4 partie inférieure).

Ainsi, tant que la température d'autorisation du passage du fluide caloporteur n'a pas atteint la température minimale (de 10°C-30°C), les plaques qui sont pourvues de canaux à obturation temporaire, c'est-à-dire généralement les plaques d'extrémité, auront des canaux obturés et ne seront pas parcourues par le fluide froid ni donc refroidies par celui-ci. Elles pourront monter lentement en température au contact des cellules d'extrémité pendant que le fluide se réchauffe au contact des plaques centrales qui sont pourvues de canaux ouverts et qui s'échauffent plus rapidement.

Et lorsque la température du fluide ne circulant que dans les plaques centrales qui s'échauffent rapidement est amenée à dépasser la température d'autorisation du passage du fluide, la micro-vanne bilame qu'il réchauffe depuis l'extérieur du canal se déforme et ouvre l'entrée du canal pour que le fluide plus chaud circule également dans les plaques d'extrémité.

La nouvelle circulation du fluide dans les plaques d'extrémité peut le refroidir et faire sa température descendre en-dessous de la température d'autorisation du passage du fluide. Dans ce cas, les micro-vannes bilames dont sont équipées les plaques d'extrémité se referment et obturent de nouveau les canaux internes de ces plaques. Et dès que la température du fluide augmente grâce à son contact exclusif avec les plaques centrales et atteint la température d'autorisation du passage dans les plaques d'extrémité, les micro-vannes bilames s'ouvrent de nouveau.

Après, la pile atteint progressivement la température optimale de fonctionnement, ce qui marque la fin de la phase de démarrage où le fluide caloporteur assure un réchauffement progressif de la pile et le début du fonctionnement normal de la pile où tous les canaux sont ouverts et où le fluide caloporteur assure une fonction de refroidissement des plaques.

L'utilisation de micro-vannes sous la forme de bilames permet un asservissement de l'ouverture et de la fermeture du canal automatique en fonction de la température, sans donc nécessiter aucun capteur de température, ni d'unité de commande électronique de l'ouverture ou de la fermeture du canal.

En outre, l'intégration du bilame à une plaque de canaux internes existante en solidarisant la micro-vanne bilame sur l'un des bords de l'entrée du canal est extrêmement simple, rapide et peu coûteuse de mise en oeuvre.

Ce mode de réalisation permet d'obtenir un asservissement automatique de l'ouverture ou de la fermeture des canaux des plaques d'extrémité, à moindre coût.

Avec le mode de réalisation où la micro-vanne est un micro-calorstat ou un micro-thermostat qui se ferme par dilatation d'une capsule de gaz, et s'ouvre progressivement par compression du gaz, on réalise en outre une introduction progressive et croissante du fluide dans le canal obturé lorsque la température de passage du fluide est atteinte.

Dans le cas d'une ouverture contrôlée des moyens d'obturation 30 des canaux internes 22, comprenant par exemple des micro-vannes pilotées, on peut avantageusement régler le débit de fluide en mesurant la tension de chaque cellule ou groupe de cellules, de manière à réguler cette tension pour obtenir une valeur homogène pour toutes les cellules, cette tension étant directement liée à la température des cellules concernées.

Par ailleurs, dans le cas d'obturations par micro-vannes ou par micro-actionneurs fluidiques, leur ouverture/fermeture (pour ceux qui fonctionnent en tout ou rien) ou leur niveau d'ouverture/fermeture (pour ceux à niveau d'ouverture/fermeture contrôlé) peuvent être pilotés de manière à conserver des tensions de cellules homogènes dans tout l'empilement, notamment au niveau des extrémités. Par exemple, lorsque toutes les plaques bipolaires disposent de micro-actionneurs, au démarrage à température négative, on impose qu'une plaque sur deux soit obturée sur tout l'empilement. Ensuite, si la mesure d'une tension de cellule est inférieure de 20 mv par exemple par rapport à celles du centre ou par rapport à la tension moyenne des cellules, le contrôleur impose de fermer (si pilotage tout ou rien) ou de réduire l'ouverture du micro-actionneur (si pilotage niveau d'ouverture) jusqu'à ce que la tension de cellule rejoigne celle des cellules du centre. Ensuite, le contrôleur gère l'ouverture/fermeture ou le niveau d'ouverture/fermeture de manière à maintenir les tensions de cellules homogènes dans tout l'empilement, notamment au niveau des extrémités.

D'une manière générale, on peut donc réaliser une répartition régulière ou irrégulière des plaques bipolaires 20, 32 comprenant les moyens d'obturation définitif ou temporaire, avec une densité plus ou moins forte de ces plaques suivant que l'on veut privilégier respectivement une montée en température plus rapide, ou une capacité totale de refroidissement à chaud plus importante.

Typiquement, une plaque bipolaire sur deux peut être obturée définitivement notamment aux extrémités de la pile. Idéalement, cette proportion est un bon compromis entre le gain pour accélérer la montée en température lors de la phase de demande à froid et la conservation de l'efficacité du refroidissement à chaud. Ou bien, la distribution des obturations peut être optimisée dans l'espace : les obturations sont plus nombreuses aux extrémités : 2/3 aux extrémités contre 1/2 au centre.

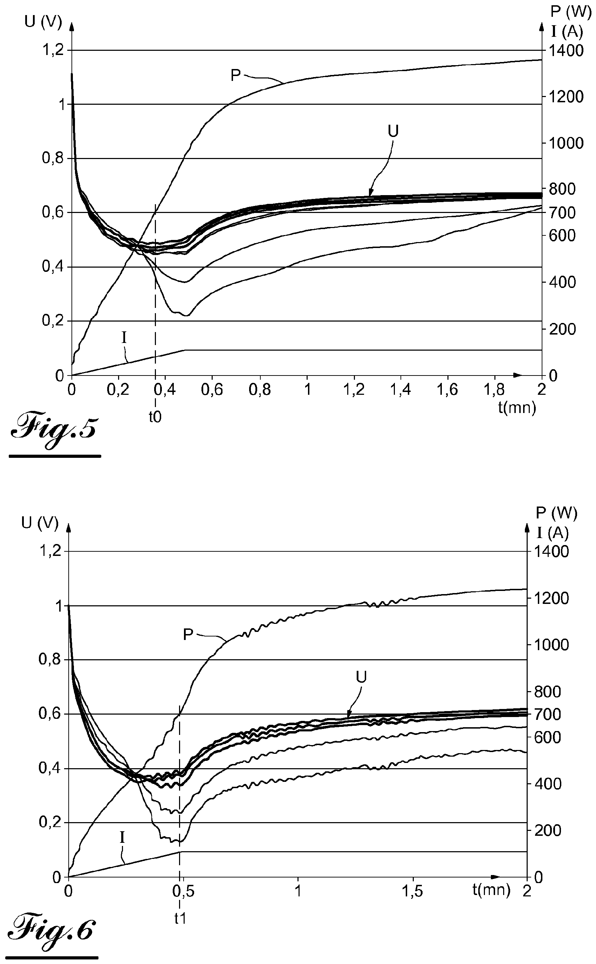

Les figures 5 et 6 présentent un démarrage d'une pile à combustible équipée de dix-neuf cellules, le temps t étant exprimé en mn, l'intensité débitée I en A, la tension individuelle de chaque cellule U en V, et la puissance totale générée P en W.

Pour la figure 5, une plaque bipolaire sur deux comporte des canaux fermés, et pour la figure 6 toutes les plaques bipolaires disposent de canaux qui restent ouverts.

On constate que pour la figure 5 la puissance P de 700W est atteinte au temps t0 en vingt-deux secondes, avec des tensions minimums U des cellules les plus froides disposées aux extrémités qui restent au dessus de 0,2V, alors que pour la figure 6 la puissance P de 700W est atteinte au temps t1 en vingt-neuf secondes, avec des tensions minimum U des cellules les plus froides qui descendent en dessous de 0,2V. De plus la montée de la puissance P pour la figure 5 est plus linéaire que pour la figure 6.

On obtient ainsi une pile à combustible comportant localement une masse thermique réduite, ou un flux de fluide de refroidissement réduit, qui accélère en ces points la montée en température, ce qui permet de limiter les besoins d'un système de préchauffage annexe, et de réduire la puissance de dispositifs de stockage d'énergie auxiliaire permettant de délivrer cette énergie en attendant une montée en température et une disponibilité de la pile à combustible.

La pile à combustible suivant l'invention peut servir avantageusement pour un véhicule automobile, et pour toutes applications stationnaires comme un groupe électrogène, pour lesquelles on recherche notamment une montée en température rapide.

## Revendications

1. Pile à combustible comportant un empilement de cellules avec des plaques conductrices bipolaires intercalées (20, 32), ces plaques bipolaires comportant des canaux internes de circulation (22) d'un fluide caloporteur, qui sont reliés à un circuit d'un système de refroidissement, certaines des plaques bipolaires (20, 32) comportant par rapport aux autres plaques, des canaux internes de circulation (22) dont certains sont obturés de manière temporaire, **caractérisée en ce que** d'autres des plaques bipolaires (20, 32) comportent des canaux internes de circulation (22) qui sont obturés de manière permanente à leur entrée par un moyen d'obturation permanent (24) qui comporte un pincement du métal formant cette entrée, un point de colle ou une soudure.

2. Pile à combustible suivant la revendication 1, **caractérisée en ce que** les plaques bipolaires (20, 32) comprenant des canaux (22) qui sont obturés, sont réalisées à partir des autres plaques bipolaires.

3. Pile à combustible suivant la revendication 1 ou 2, **caractérisée** en ce le volume interne des canaux (22) est mis sous vide, ou rempli par un gaz ou par un matériau comportant une faible capacité thermique.

4. Pile à combustible suivant la revendication 1 ou 2, **caractérisée en ce que** les plaques bipolaires (32) comprenant des canaux (22) qui sont obturés, comportent un moyen d'obturation temporaire (30) disposant d'un moyen de fonctionnement automatique en fonction de la température de cette plaque.

5. Pile à combustible suivant la revendication 1 ou 2, **caractérisée en ce que** les plaques bipolaires (20) comprenant des canaux (22) qui sont obturés, comportent un moyen d'obturation temporaire (30) qui est piloté, comme un micro-actionneur.

6. Pile à combustible suivant l'une quelconque des revendications précédentes, **caractérisée en ce qu'**elle comporte dans ses zones d'extrémité, une plus grande densité de plaques bipolaires (20, 32) comprenant des canaux internes de circulation (22) qui sont obturés, ou une absence de canaux internes.

7. Pile à combustible suivant la revendication 1, **caractérisée en ce que** certaines des plaques bipolaires (20, 32) ont par rapport aux autres plaques, une absence de canaux internes et alors une masse thermique réduite par rapport aux autres plaques comportant des canaux (22).

8. Groupe électrogène disposant d'une pile à combustible, **caractérisé en ce que** cette pile à combustible est réalisée suivant l'une quelconque des revendications précédentes.

9. Véhicule électrique comprenant une pile à combustible délivrant un courant électrique utilisé pour la traction, **caractérisé en ce que** cette pile à combustible est réalisée suivant l'une quelconque des revendications 1 à 7.

## Patentansprüche

1. Brennstoffzelle, aufweisend einen Stapel von Zellen mit zwischengestellten bipolaren leitenden Platten (20, 32), wobei diese bipolaren Platten innere Zirkulationskanäle (22) eines Wärmeträgerfluids aufweisen, die mit einem Kreis eines Kühlsystems verbunden sind, wobei einige der bipolaren Platten (20, 32) in Bezug zu anderen Platten innere Zirkulationskanäle (22) aufweisen, von denen einige zeitweise verschlossen sind, **dadurch gekennzeichnet, dass** andere der bipolaren Platten (20, 32) innere Zirkulationskanäle (22) aufweisen, die ständig an ihrem Eingang von einem ständigen Verschlussmittel (24) verschlossen sind, das eine zusammengedrücktes Metall, welches diesen Eingang bildet, einen Klebstoffpunkt oder eine Schweißnaht aufweist.

2. Brennstoffzelle nach Anspruch 1, **dadurch gekennzeichnet, dass** die bipolaren Platten (20, 32), die Kanäle (22) umfassen, die verschlossen sind, aus den anderen bipolaren Platten hergestellt sind.

3. Brennstoffzelle nach Anspruch 1 oder 2, **dadurch gekennzeichnet, dass** das innere Volumen der Kanäle (22) in ein Vakuum versetzt ist oder mit einem Gas oder mit einem Material gefüllt ist, welches eine geringe Wärmekapazität aufweist.

4. Brennstoffzelle nach Anspruch 1 oder 2, **dadurch gekennzeichnet, dass** die bipolaren Platten (32), die Kanäle (22) umfassen, die verschlossen sind, ein zeitweises Verschlussmittel (30) aufweisen, das über ein automatisches Funktionsmittel in Abhängigkeit von der Temperatur dieser Platte verfügt.

5. Brennstoffzelle nach Anspruch 1 oder 2, **dadurch gekennzeichnet, dass** die bipolaren Platten (20), die Kanäle (22) umfassen, die verschlossen sind, ein zeitweises Verschlussmittel (30) aufweisen, das gesteuert wird, wie ein Mikro-Stellglied.

6. Brennstoffzelle nach einem der vorangehenden Ansprüche, **dadurch gekennzeichnet, dass** sie in ihren Endzonen eine größere Dichte bipolarer Platten (20, 32) aufweist, die innere Zirkulationskanäle (22) umfassen, die verschlossen sind, oder eine Abwesenheit innerer Kanäle.

7. Brennstoffzelle nach Anspruch 1, **dadurch gekennzeichnet, dass** einige der bipolaren Platten (20, 32) in Bezug zu den anderen Platten eine Abwesenheit innerer Kanäle haben und demzufolge eine reduzierte thermische Masse in Bezug zu den anderen Platten, welche Kanäle (22) aufweisen.

8. Stromerzeugergruppe mit einer Brennstoffzelle, **dadurch gekennzeichnet, dass** diese Brennstoffzelle nach einem der vorangehenden Ansprüche hergestellt ist.

9. Elektrofahrzeug, umfassend eine Brennstoffzelle, die einen elektrischen Strom liefert, der für den Antrieb verwendet wird, **dadurch gekennzeichnet, dass** diese Brennstoffzelle nach einem der Ansprüche 1 bis 7 hergestellt ist.

## Claims

1. A fuel-cell stack including a stack of cells with intercalated bipolar conductive plates (20, 32), these bipolar plates including inner circulation channels (22) for a coolant, which are connected to a circuit of a cooling system, some of the bipolar plates (20, 32) including, relative to the other plates, inner circulation channels (22), some of which are temporarily closed off, **characterized in that** others of the bipolar plates (20, 32) include inner circulation channels (22) that are permanently closed off at their inlet by a permanent closure means (24) that includes a pinching of the metal forming this inlet, a spot of glue or a weld.

2. The fuel-cell stack according to claim 1, **characterized in that** the bipolar plates (20, 32) comprising channels (22) that are closed off, are made from other bipolar plates.

3. The fuel-cell stack according to claim 1 or 2, **characterized in that** the inner volume of the channels (22) is placed under vacuum, or filled with a gas or a material having a low thermal capacity.

4. The fuel-cell stack according to claim 1 or 2, **characterized in that** the bipolar plates (32) comprising channels (22) that are closed off, include a temporary closure means (30) having an automatic operating means based on the temperature of this plate.

5. The fuel-cell stack according to claim 1 or 2, **characterized in that** the bipolar plates (20) comprising channels (22) that are closed off, include a temporary closure means (30) that is controlled, like a micro-actuator.

6. The fuel-cell stack according to any one of the preceding claims, **characterized in that** it includes, in its end zones, a higher density of bipolar plates (20, 32) comprising inner circulation channels (22) that are closed off, or an absence of inner channels.

7. The fuel-cell stack according to claim 1, **characterized in that** some of the bipolar plates (20, 32) have, relative to the other plates, an absence of inner channels, and then a lower thermal mass relative to the other plates including channels (22).

8. A generator set having a fuel-cell stack, **characterized in that** this fuel-cell stack is made according to any one of the preceding claims.

9. An electric vehicle comprising a fuel-cell stack delivering electric current used for front-wheel-drive, **characterized in that** this fuel-cell stack is made according to any one of claims 1 to 7.
